# FASCICULE DE BREVET EUROPEEN

(11) **EP 3 610 177 B1**
(45) Date de publication et mention de la délivrance du brevet: **31.03.2021**
(21) Numéro de dépôt: 18725267.1
(22) Date de dépôt: 10.04.2018
(51) Int. Cl.: F16H 57/04

(54) **TRAIN D'ENGRENAGES EPICYCLOÏDAL**
PLANETENGETRIEBE
PLANETARY GEARSET

(30) Priorité: 14.04.2017 FR 1753296
(43) Date de publication de la demande: 19.02.2020
(73) Titulaire: Safran Transmission Systems, 92700 Colombes (FR)
(72) Inventeur: MORREALE, Serge, René, 77550 Moissy-Cramayel (FR); CATY, Fabien, Roger, Gaston, 77550 Moissy-Cramayel (FR); GEDIN, Patrice, Jocelyn, Francis, 77550 Moissy-Cramayel (FR)
(74) Mandataire: Ernest Gutmann - Yves Plasseraud S.A.S.
(86) Numéro de dépôt international: PCT/FR2018/050897
(87) Numéro de publication internationale: WO 2018/189476

(56) Documents cités:
- FR-A1- 2 987 416
- FR-A1- 3 041 054

## Description

Le domaine de la présente invention est celui des turbomachines et plus particulièrement des trains d'engrenages épicycloïdaux et parmi les trains épicycloïdaux plus spécifiquement les réducteurs épicycloïdaux et les transmissions différentielles.

De façon classique, un réducteur à train d'engrenages épicycloïdal comprend un pignon planétaire ou pignon central, une couronne planétaire ou couronne extérieure et des pignons satellites qui sont en prise avec le pignon planétaire et avec la couronne, le support de l'un de ces trois composants devant être bloqué en rotation pour le fonctionnement du train d'engrenages. Lorsque le porte-satellites est fixe en rotation, le pignon central et la couronne sont menant et mené, respectivement, ou inversement. La lubrification et le refroidissement des engrènements et des axes des pignons satellites ne posent alors aucun problème et sont assurés par des gicleurs qui sont fixes en rotation et qui peuvent projeter de l'huile en permanence sur les zones d'engrènement des pignons satellites avec le pignon central et avec la couronne et sur les axes des pignons satellites.

Toutefois, dans le cas le plus fréquent, la couronne extérieure est fixe en rotation et le pignon central et le porte-satellites sont menant et mené, respectivement. Ce type de montage est préféré dans les cas où un rapport de réduction supérieur à trois est souhaité puisqu'il s'avère moins encombrant. La lubrification des zones d'engrènement et des axes des pignons satellites pose alors un problème qui est résolu dans la technique actuelle par des réseaux complexes de conduits de cheminement d'huile sous pression, utilisant des joints dynamiques ou joints tournants qui sont soumis à une usure et qu'il faut vérifier et changer régulièrement.

Ainsi, la déposante a proposé dans sa demande WOA12010092263 un dispositif de lubrification dans lequel un injecteur fixe fait gicler de l'huile dans une coupelle annulaire solidaire d'un porte-satellites, l'huile étant ainsi récupérée par centrifugation et dirigée par la suite vers des moyens de lubrification des pignons. Ce dispositif évite l'utilisation des joints dynamiques ou tournants, ce qui améliore la fiabilité du système de lubrification du réducteur ainsi que sa maintenance.

Dans une seconde configuration connue, le gicleur peut être porté par l'arbre portant le pignon central de sorte à avoir son jet d'huile orienté en direction de la coupelle.

Toutefois, dans l'une et l'autre des deux configurations précitées, à faible vitesse de rotation, le débit d'huile qui sort des gicleurs peut être trop important par rapport à la vitesse de rotation du porte-satellites de sorte que de l'huile s'accumule dans la coupelle annulaire, conduisant à des projections d'huile parasites. De plus, un excédent d'huile peut circuler à l'intérieur des axes des pignons satellites conduisant à un réchauffement trop important de l'huile qu'il convient ultérieurement de refroidir.

L'invention a notamment pour but d'apporter une solution simple, efficace et économique aux problèmes de l'art antérieur décrit précédemment.

A cet effet, elle propose un train d'engrenages épicycloïdal comprenant un pignon central, une couronne extérieure et des pignons satellites en prise avec le pignon central et avec la couronne extérieure et montés chacun libre en rotation sur un porte-satellites, le train d'engrenages comprenant un premier circuit d'huile de lubrification des zones de contact des dentures des pignons satellites avec le pignon central et un second circuit d'huile de lubrification des axes des pignons satellites, une coupelle annulaire étant solidaire du porte-satellites et ouverte radialement vers l'intérieur, caractérisé en ce que la coupelle est divisée en une succession circonférentielle de premières cuvettes du premier circuit d'huile et de secondes cuvettes du second circuit d'huile, les premières cuvettes étant séparées fluidiquement des secondes cuvettes et en ce que la coupelle comprend deux parois annulaires en vis-à-vis axial dont la paroi annulaire la plus éloignée d'un plan transverse médian du train d'engrenage comprend des ouvertures débouchant dans les des secondes cuvettes.

Selon l'invention, les ouvertures réalisées dans les portions de la paroi délimitant latéralement les secondes cuvettes autorisent une évacuation de l'excédent d'huile par les ouvertures.

Préférentiellement, des ouvertures ne sont réalisés que dans les portions de la paroi délimitant les secondes cuvettes alors que les premières cuvettes qui assurent une alimentation en huile des zones de contact des dentures des pignons satellites avec le pignon central ne comprennent pas d'ouverture pour éviter de réduire la pression dans le premier circuit.

Selon l'invention, les ouvertures sont formées circonférentiellement dans la paroi annulaire la plus éloignée du plan transverse, au niveau des parties délimitant les secondes cuvettes.

Selon une autre caractéristique de l'invention, les ouvertures comprennent des encoches délimitant une partie du bord annulaire radialement interne de ladite paroi annulaire de manière à ce que ledit bord annulaire soit crénelé. Les encoches peuvent avoir une profondeur, en direction radiale, de l'ordre de 20 à 50% de la profondeur des premières cuvettes.

Dans une réalisation particulière de l'invention, les encoches s'étendent sur toute la distance angulaire d'une seconde cuvette.

L'invention est particulièrement intéressante lorsque les premières cuvettes sont reliées à des premières canalisations d'alimentation en huile de la zone de contact entre les dentures des pignons satellites et la denture du pignon central, et que les secondes cuvettes sont reliées à des secondes canalisations d'alimentation en huile des axes des pignons satellites.

L'invention concerne également une turbomachine comprenant un train d'engrenages tel que décrit précédemment, dont le pignon central entoure et est solidaire en rotation d'un arbre de la turbomachine, et des moyens de projection d'huile agencés radialement à l'extérieur de l'arbre et comportant au moins un gicleur d'huile projetant de l'huile en direction de la coupelle annulaire.

Ledit gicleur peut être porté par la surface externe de l'arbre et positionné de manière à ce que son jet d'huile soit orienté vers la coupelle.

Le train d'engrenages est, avantageusement, un réducteur et est monté dans une enceinte annulaire formée radialement à l'intérieur d'un compresseur basse pression, le porte-satellites étant relié à une roue de soufflante amont et l'arbre étant un l'arbre du compresseur basse pression.

Dans une configuration particulière de montage, le réducteur à train d'engrenages est intercalé axialement entre un palier amont et un palier aval portés par une structure statorique du compresseur basse pression, le palier amont guidant en rotation un arbre de liaison de la roue de soufflante au porte-satellites et le palier aval guidant en rotation l'arbre du compresseur basse pression.

Egalement, les premiers moyens fixes de projection d'huile peuvent être intégrés à un circuit d'huile comprenant en outre des seconds moyens de projection d'huile sur le palier amont et le palier aval et une pompe d'alimentation simultanée des premiers et seconds moyens de projection d'huile. Ainsi, il est possible de simplifier la conception de l'alimentation en huile de la turbomachine.

L'invention est, par exemple, applicable à un train d'engrenage, tel qu'un train d'engrenage dans lequel la couronne extérieure est fixe. Dans ce cas, le train d'engrenages peut être qualifié de réducteur puisque la vitesse de sortie, c'est-à-dire celle du porte-satellites est plus faible que la vitesse d'entrée, c'est-à-dire celle de l'arbre d'entrainement en rotation du pignon central. L'invention concerne également un train d'engrenage à transmission différentielle, dans lequel le porte-satellite et la couronne extérieure sont mobiles en rotation dans des sens opposés, le porte-satellites entrainant en rotation préférentiellement une première roue de soufflante amont et la couronne extérieure entrainant préférentiellement une seconde roue de soufflante aval. Avec un tel agencement, on obtient un montage à double soufflantes contrarotatives.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une demi-vue schématique en coupe axiale d'un réducteur à train d'engrenages épicycloïdal dans une turbomachine selon l'invention ;
- la figure 2 est une vue schématique en perspective tronquée du réducteur à train d'engrenages et des moyens de lubrification des satellites ;
- la figure 3 est une vue schématique en coupe d'un rouet selon l'invention.

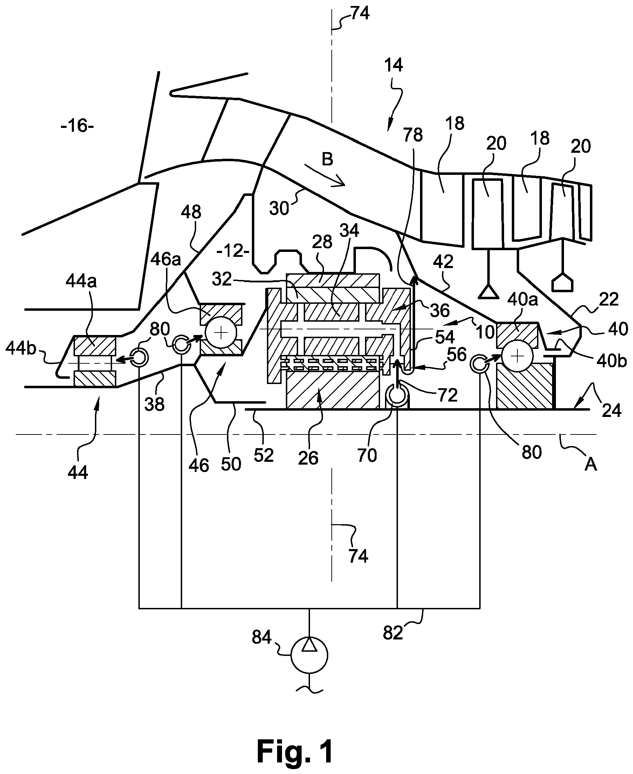

On se réfère tout d'abord à la figure 1 qui représente schématiquement un réducteur 10, selon l'invention, à train d'engrenages épicycloïdal monté dans une turbomachine telle qu'un turboréacteur d'avion. Plus précisément, le train d'engrenages 10 est monté dans une enceinte annulaire 12 formée radialement à l'intérieur d'un compresseur basse pression 14 qui est agencé en aval d'une roue de soufflante 16 et en amont d'un compresseur haute pression (non représenté). Le compresseur basse pression 14 comprend une pluralité de rangées d'aubes fixes 18 et de rangées annulaires d'aubes mobiles 20 disposées axialement, le long de l'axe A, en alternance. Les rangées d'aubes mobiles 20 sont reliées par une paroi annulaire 22 à un arbre 24 basse pression entrainant également en rotation les aubes d'une turbine basse pression aval (non représentée).

Le réducteur à train d'engrenages 10 comprend un pignon central 26 ou pignon planétaire entourant l'extrémité amont de l'arbre 24 du compresseur basse pression et solidaire de celui-ci, une couronne externe 28 ou couronne planétaire entourant le pignon central 26 et reliée fixement à une paroi annulaire 30 définissant intérieurement la veine d'écoulement du flux d'air primaire (flèche B) circulant dans le compresseur basse pression 14. Le réducteur 10 comprend encore des pignons satellites 32 qui sont en prise par leurs dentures avec des dentures du pignon central 26 et de la couronne externe 28. Ces pignons satellites 32 sont montés libres en rotation sur des axes 34 d'un porte-satellites 36 dont l'extrémité amont est reliée par un arbre de liaison 38 à la roue de soufflante 16.

L'arbre 24 du compresseur basse-pression 14 est porté et guidé en rotation par un palier aval 40 à roulement à billes dont la bague externe 40a est solidaire d'une première partie statorique 42 du compresseur basse pression 14 reliée extérieurement à la paroi annulaire interne 30 de la veine d'air primaire. L'arbre de liaison 38 est porté et guidé en rotation par deux paliers 44, 46 agencés en amont du réducteur 10 dont un premier palier 44 qui est agencé en amont d'un second palier 46 est un palier à roulement à rouleaux, le second palier 46 étant un palier à roulement à billes. Les bagues externes 44a, 46a des premier et second paliers de roulement sont portées par une seconde partie statorique 48 du compresseur basse pression reliée extérieurement à la paroi annulaire interne 30 de la veine d'air primaire.

L'enceinte annulaire 12 de logement du réducteur 10 à train d'engrenages épicycloïdal est ainsi délimitée radialement vers l'intérieur par l'arbre 24 du compresseur basse pression 14, radialement vers l'extérieur par les première 42 et seconde 48 parties statoriques et la paroi annulaire interne 30 de la veine d'air primaire, à l'amont par le premier palier amont 44 et à l'aval par le palier aval 40. On note que l'arbre de liaison 38 comprend également une paroi annulaire 50 coopérant à étanchéité avec l'extrémité amont 52 de l'arbre 24 du compresseur basse pression 14 pour éviter les fuites d'huile de lubrification à cet endroit. De même, pour limiter les fuites d'huile, la bague externe 44a du premier palier 44 amont et la bague externe 40a du palier aval 40 comprennent chacune une portion annulaire 44b, 40b coopérant à étanchéité avec l'arbre de liaison 38 et l'arbre 24 du compresseur basse pression 10, respectivement.

La rotation des pignons satellites 32 dans les axes 34 du porte-satellites s'effectue par l'intermédiaire de paliers lisses.

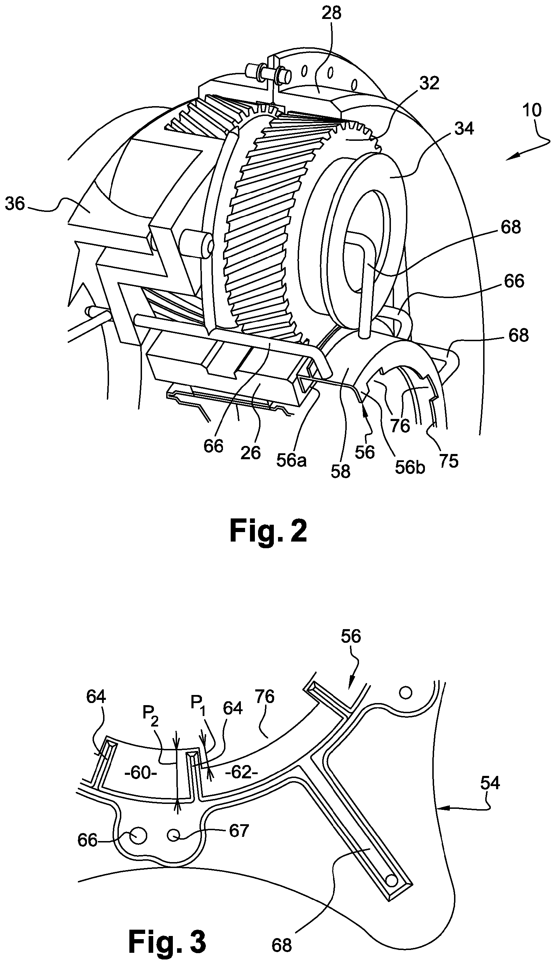

Le réducteur 10 à train d'engrenages épicycloïdal comprend des moyens de lubrification par projection d'huile sur les dentures des pignons satellites 32 et leurs axes 34, ces moyens comprenant un premier circuit d'huile et un second circuit d'huile indépendants qui reçoivent l'huile d'un rouet 54 agencé en aval du réducteur 10 et comportant une coupelle annulaire 56, plus particulièrement de forme circulaire (figure 2). La coupelle 56 présente ici une section en U dont l'ouverture est orientée radialement vers l'axe A, c'est-à-dire en direction de l'arbre 24 basse pression. La coupelle 56 du rouet 54 comprend une paroi cylindrique 58 de fond reliée à ses extrémités axiales amont et aval à des parois annulaires radiales 56a, 56b (figure 2). La coupelle 56 est divisée circonférentiellement en une succession de cuvettes 60, 62 séparées circonférentiellement par des parois 64 orientées radialement et s'étendant axialement entre les deux parois annulaires radiales 56a, 56b. Dans l'exemple représenté en figure 3, les parois de séparation circonférentielle 64 délimitent des premières cuvettes 60 disposées en alternance avec des secondes cuvettes 62. Les premières cuvettes 60 appartiennent au premier circuit d'huile et les secondes cuvettes appartiennent au second circuit d'huile. Comme cela est visible, les premières cuvettes 60 peuvent présenter une étendue angulaire inférieure à celle des secondes cuvettes 62.

Les premières cuvettes 60 comprennent chacune un orifice de sortie d'huile formé dans la paroi cylindrique de fond 58 et débouchant dans des premières canalisations 66 d'alimentation en huile de la zone de contact entre les dentures des pignons satellites 32 et la denture du pignon central 26 (figures 2 et 3). Les secondes cuvettes 62 comprennent chacune un orifice de sortie d'huile formé dans la paroi cylindrique de fond 58 et débouchant dans des secondes canalisations 68 d'alimentation en huile des axes 34 des pignons satellites 32 (figures 2 et 3). Sur la figure 3, l'orifice 67 permet la fixation de la coupelle annulaire 56 sur le porte-satellites 36.

Les premières cuvettes 60 sont différentes des secondes cuvettes 62 et les différences ont essentiellement pour fonction d'assurer une alimentation optimale en huile des éléments agencés à des positions radiales différentes. Ces différences permettent également d'orienter le surplus d'huile à distance du réducteur et forcer la lubrification des éléments les plus proches de l'arbre que sont la zone de contact entre les dentures du pignon satellite 32 et les dentures du pignon central 26. Ainsi, les secondes cuvettes pourraient être moins profondes que les premières cuvettes.

Des moyens de projection d'huile sont également prévus et comprennent une pluralité de gicleurs 72 d'huile répartis autour de l'axe A et qui sont reliés à une pompe et un réservoir d'huile (figure 1). Dans une réalisation de l'invention, les gicleurs 72 d'huile sont des orifices agencés sur un anneau 70 fixe entourant l'arbre 24. Cet anneau 70 est monté dans l'espace radial entre la coupelle annulaire 56 et l'arbre 24. Ces gicleurs 72 sont orientés de manière à ce que leurs jets d'huile projettent de l'huile en direction de la coupelle 70, entre les parois annulaires radiales 56a, 56b. La direction de projection est préférentiellement radiale, éventuellement légèrement inclinée vers l'aval, l'amont ou selon le sens de rotation, c'est-à-dire que la direction de projection est comprise dans un cône angulaire d'axe radial et ayant une ouverture de 20°.

Le diamètre d'un gicleur 72 doit être supérieur au diamètre maximum des particules susceptibles d'obturer les gicleurs. Le diamètre doit également être suffisamment grand pour assurer un débit d'huile d'alimentation de la coupelle 56 et suffisamment énergétique pour être rectiligne sur une distance d'environ 5 cm. Dans une réalisation pratique de l'invention, les moyens de projection d'huile sont configurés pour avoir une pression de sortie d'environ 1 bar dans les régimes les moins favorables comme le ralenti. Si on souhaite éloigner les gicleurs 72 de la coupelle, il faut alors augmenter la pression de l'huile.

Comme représenté sur la figure 3, la paroi annulaire radiale aval 56b de la coupelle 56, c'est-à-dire la paroi annulaire radiale 56b la plus éloignée d'un plan radial médian 74 du réducteur 10, comprend des ouvertures 76 ayant dans l'exemple représenté la forme d'encoches qui débouchent dans les secondes cuvettes 62. Ces encoches 76 sont formées dans le bord 75 annulaire radialement interne de la paroi annulaire radiale aval 56b. Plus particulièrement, les encoches sont formées dans les portions de la paroi annulaire radiale 56b aval définissant latéralement les secondes cuvettes 62. De cette manière, on remarque que la paroi annulaire radiale 56b aval forme une paroi annulaire crénelé. Avec un tel agencement, il est possible de mieux réguler le débit d'huile alimentant le premier circuit d'huile et le second circuit d'huile. En effet, lorsque le débit d'huile alimentant les gicleurs 72 est régulé par une pompe dont le débit de sortie est directement proportionnel à la vitesse d'un arbre du compresseur haute pression, il s'ensuit qu'en phase de ralenti le débit d'huile peut être trop important dans le second circuit d'huile alimentant les axes des pignons satellites 32, ce qui est évité par la réalisation d'encoches 76 sur les portions de la paroi annulaire radiale aval 56b des secondes cuvettes 62. L'excédent d'huile (flèche 78) s'écoule alors par les encoches directement sur la paroi tronconique 30 du compresseur basse pression 14 au contact de laquelle l'huile se refroidit. L'huile s'écoule ensuite par gravité jusqu'au point le plus bas de la turbomachine pour être récupérée par un collecteur agencé à six heures par rapport au cadran d'une montre.

Dans une réalisation particulière de l'invention, les encoches peuvent avoir une profondeur P1, en direction radiale, de l'ordre de 20 à 50% de la profondeur P2 des premières cuvettes 60.

Bien évidemment, les encoches 76 pourraient être remplacées par des ouvertures circulaires ou oblongues assurant la même fonction de régulation de la quantité d'huile. Ainsi, le terme ouverture désigne un passage réalisé dans la paroi annulaire de la coupelle 56 qui est la plus éloignée du plan médian 74 du réducteur 10, c'est-à-dire en référence aux figures la paroi annulaire radial aval 56b de la coupelle 56. On comprend que l'ouverture pourrait avoir de nombreuses formes qui entrent toutes dans la portée de la protection conférée à l'invention.

En référence de nouveau à la figure 1, la turbomachine comprend également des seconds moyens 80 de projection d'huile sur les paliers de roulement amont 44, 46 et le palier aval 40. Ces premiers 70 et seconds 80 moyens de projection d'huile sont intégrés à un même circuit d'huile 82 qui comprend également une pompe 84. Cette pompe 84 alimente simultanément les premiers moyens 70 de projections d'huile alimentant le réducteur épicycloïdal 10 et les seconds moyens d'alimentation des paliers 40, 44, 46.

Ainsi, le montage selon l'invention d'une écope annulaire solidaire de l'arbre permet d'assurer une centrifugation de l'huile à bas régime et il est possible d'avoir une pompe d'alimentation dont la vitesse de fonctionnement n'a pas besoin d'être fonction de la vitesse de rotation de l'arbre 24 entrainant le pignon central. Dans une configuration particulière, la vitesse de fonctionnement de la pompe peut également être choisie pour être dépendante de la vitesse d'un arbre haute pression de la turbomachine tel que l'arbre du compresseur haute pression.

## Revendications

1. Train (10) d'engrenages épicycloïdal comprenant un pignon central (26), une couronne extérieure (28) et des pignons satellites (32) en prise avec le pignon central (26) et avec la couronne extérieure (28) et montés chacun libre en rotation sur un porte-satellites (32), le train d'engrenages (10) comprenant un premier circuit d'huile de lubrification des zones de contact des dentures des pignons satellites (32) avec le pignon central (26) et un second circuit d'huile de lubrification des axes (34) des pignons satellites (32), une coupelle annulaire (56) étant solidaire du porte-satellites (36) et ouverte radialement vers l'intérieur, la coupelle (56) est divisée en une succession circonférentielle de premières cuvettes (60) du premier circuit d'huile et de secondes cuvettes (62) du second circuit d'huile, les premières cuvettes (60) étant séparées fluidiquement des secondes cuvettes (62) **caractérisé en ce que** la coupelle (56) comprend deux parois annulaires (56a, 56b) en vis-à-vis axial dont la paroi annulaire (56b) la plus éloignée d'un plan (74) radial médian du train d'engrenage (10) comprend des ouvertures (76) débouchant dans les secondes cuvettes (62).

2. Train d'engrenages selon la revendication 1, **caractérisé en ce que** les ouvertures (76) comprennent des encoches délimitant une partie du bord annulaire radialement interne de ladite paroi annulaire de manière à ce que ledit bord annulaire soit crénelé.

3. Train d'engrenages selon la revendication 2, **caractérisé en ce que** les encoches (76) s'étendent sur toute la distance angulaire d'une seconde cuvette (62).

4. Train d'engrenages selon l'une des revendications 1 à 3, **caractérisé en ce que** les premières cuvettes sont reliées à des premières canalisations d'alimentation (66) en huile de la zone de contact entre les dentures des pignons satellites (32) et la denture du pignon central (24), et **en ce que** les secondes cuvettes (62) sont reliées à des secondes canalisations (68) d'alimentation en huile des axes (34) des pignons satellites (32).

5. Turbomachine comprenant un train d'engrenages selon l'une des revendications 1 à 4 dont le pignon central (26) entoure et est solidaire en rotation d'un arbre (24) de la turbomachine, et des premiers moyens de projection d'huile agencés radialement à l'extérieur de l'arbre (24) et comportant au moins un gicleur d'huile (72) projetant de l'huile en direction de la coupelle annulaire (56).

6. Turbomachine selon la revendication 5, **caractérisée en ce que** ledit au moins un gicleur (72) est porté par la surface externe de l'arbre (24) et positionné de manière à ce que son jet d'huile soit orienté vers la coupelle (56).

7. Turbomachine selon la revendication 5 ou 6, **caractérisée en ce que** le train d'engrenages est un réducteur et est monté dans une enceinte (12) annulaire formée radialement à l'intérieur d'un compresseur basse pression (14), le porte-satellites (36) étant relié à une roue de soufflante (16) amont et l'arbre étant un l'arbre (24) du compresseur basse pression (14).

8. Turbomachine selon la revendication 7, **caractérisée en ce que** le réducteur (10) à train d'engrenages est intercalé axialement entre un palier amont (44, 46) et un palier aval (40) portés par une structure statorique (42, 48) du compresseur basse pression (14), le palier amont (44, 46) guidant en rotation un arbre de liaison (38) de la roue de soufflante (16) au porte-satellites (36) et le palier aval (40) guidant en rotation l'arbre (24) du compresseur basse pression.

9. Turbomachine selon la revendication 8, **caractérisée en ce que** les premiers moyens fixes de projection d'huile sont intégrés à un circuit d'huile comprenant en outre des seconds moyens de projection d'huile sur le palier amont (44, 46) et le palier aval (40) et une pompe (84) d'alimentation simultanée des premiers (70) et seconds moyens (80) de projection d'huile.

## Patentansprüche

1. Planetengetriebezug (10) mit einem Sonnenrad (26), einem äußeren Hohlrad (28) und Planetenrädern (32), die mit dem Sonnenrad (26) und dem äußeren Hohlrad (28) in Eingriff sind und jeweils auf einem Planetenträger (32) frei drehbar gelagert sind, wobei der Getriebezug (10) einen ersten Schmierölkreislauf zur Schmierung der Kontaktbereiche der Verzahnungen der Planetenräder (32) mit dem Sonnenrad (26) und einen zweiten Schmierölkreislauf zur Schmierung der Achsen (34) der Planetenräder (32) aufweist, wobei eine ringförmige Schale (56) fest mit dem Planetenträger (36) verbunden und radial nach innen offen ist, wobei die Schale (56) in eine umfängliche Folge von ersten Näpfen (60) des ersten Ölkreislaufs und zweiten Näpfen (62) des zweiten Ölkreislaufs unterteilt ist, wobei die ersten Näpfe (60) fluidmäßig von den zweiten Näpfen (62) getrennt sind,
**dadurch gekennzeichnet, dass** die Schale (56) zwei axial gegenüberliegende, ringförmige Wände (56a, 56b) enthält, von denen die von einer radialen Mittelebene (74) des Getriebezugs (10) weiter entfernt liegende ringförmige Wand (56b) Öffnungen (76) aufweist, die in die zweiten Näpfe (62) münden.

2. Getriebezug nach Anspruch 1,
**dadurch gekennzeichnet, dass** die Öffnungen (76) Einkerbungen aufweisen, die einen Teil des radial inneren Ringrandes der ringförmigen Wand begrenzen, so dass der Ringrand eingekerbt ist.

3. Getriebezug nach Anspruch 2,
**dadurch gekennzeichnet, dass** sich die Einkerbungen (76) über die gesamte Winkelerstreckung eines zweiten Napfes (62) erstrecken.

4. Getriebezug nach einem der Ansprüche 1 bis 3,
**dadurch gekennzeichnet, dass** die ersten Näpfe mit ersten Ölversorgungsleitungen (66) für den Kontaktbereich zwischen den Verzahnungen der Planetenräder (32) und der Verzahnung des Sonnenrads (24) verbunden sind und dass die zweiten Näpfe (62) mit zweiten Ölversorgungsleitungen (68) für die Achsen (34) der Planetenräder (32) verbunden sind.

5. Turbomaschine mit einem Getriebezug nach einem der Ansprüche 1 bis 4, dessen Sonnenrad (26) eine Welle (24) der Turbomaschine umgibt und drehfest mit dieser verbunden ist, und mit ersten Ölaufspritzmitteln, die radial außerhalb der Welle (24) angeordnet sind und zumindest eine Öldüse (72) aufweisen, die Öl in Richtung der ringförmigen Schale (56) aufspritzt.

6. Turbomaschine nach Anspruch 5,
**dadurch gekennzeichnet, dass** die zumindest eine Düse (72) von der Außenfläche der Welle (24) getragen wird und so angeordnet ist, dass ihr Ölstrahl auf die Schale (56) gerichtet ist.

7. Turbomaschine nach Anspruch 5 oder 6,
**dadurch gekennzeichnet, dass** der Getriebezug ein Untersetzungsgetriebe ist und in einem radial innerhalb eines Niederdruckverdichters (14) ausgebildeten Ringgehäuse (12) gelagert ist, wobei der Planetenträger (36) mit einem vorgelagerten Lüfterrad (16) verbunden ist und die Welle eine Welle (24) des Niederdruckverdichters (14) ist.

8. Turbomaschine nach Anspruch 7,
**dadurch gekennzeichnet, dass** das Untersetzungsgetriebe (10) mit Getriebezug axial zwischen einem vorgelagerten Lager (44, 46) und einem nachgelagerten Lager (40) angeordnet ist, die von einer Statorstruktur (42, 48) des Niederdruckverdichters (14) getragen werden, wobei das vorgelagerte Lager (44, 46) eine Verbindungswelle (38) zum Verbinden des Lüfterrades (16) mit dem Planetenträger (36) drehbar führt und das nachgelagerte Lager (40) die Welle (24) des Niederdruckverdichters drehbar führt.

9. Turbomaschine nach Anspruch 8,
**dadurch gekennzeichnet, dass** die ortsfesten ersten Ölaufspritzmittel in einen Ölkreislauf integriert sind, der ferner zweite Ölaufspritzmittel für das vorgelagerte Lager (44, 46) und das nachgelagerte Lager (40) sowie eine Versorgungspumpe (84) zur gleichzeitigen Versorgung der ersten (70) und der zweiten (80) Ölaufspritzmittel enthält.

## Claims

1. An epicycloidal gear train (10) comprising a central pinion (26), an outer crown (28) and satellite pinions (32) engaging the central pinion (26) and the outer crown (28) and each mounted freely rotatable on a satellite carrier (32), the gear train (10) comprising a first lubrication oil circuit for the contact areas of the gear teeth of the satellite pinions (32) with the central pinion (26) and a second lubrication oil circuit for the axes (34) of the satellite pinions (32), an annular cup (56) being integral with the satellite carrier (36) and open radially inward, **characterized in that** the cup (56) is divided into a circumferential succession of first basins (60) of the first oil circuit and second basinss (62) of the second oil circuit, the first basins (60) being fluidly separated from the second basins (62) **characterized in that** the cup (56) comprises two annular walls (56a, 56b) axially facing, the annular wall (56b) of which is furthest from a median radial plane (74) of the gear train (10) has openings (76) opening into the second basins (62).

2. A gear train according to claim 1, **characterized in that** the openings (76) comprise notches delimiting a portion of the radially inner annular edge of said annular wall so that said annular edge is notched.

3. A gear train according to claim 2, **characterized in that** the notches (76) extend over the entire angular distance of a second basin (62).

4. A gear train according to one of claims 1 to 3, **characterized in that** the first basins are connected to first oil supply lines (66) of the contact area between the teeth of the satellite pinions (32) and the teeth of the central pinion (24), and **in that** the second basins (62) are connected to second oil supply lines (68) of the axes (34) of the satellite pinions (32).

5. A turbomachine comprising a gear train according to one of claims 1 to 4, the central pinion (26) of which surrounds and is rotationally fixed to a shaft (24) of the turbomachine, and first oil spraying means arranged radially outside the shaft (24) and having at least one oil nozzle (72) projecting oil towards the annular cup (56).

6. Turbomachine according to claim 5, **characterized in that** said at least one nozzle (72) is carried by the outer surface of the shaft (24) and positioned so that its oil jet is directed towards the cup (56).

7. Turbomachine according to claim 5 or 6, **characterized in that** the gear train is a reducer and is mounted in an annular chamber (12) formed radially inside a low-pressure compressor (14), the satellite carrier (36) being connected to an upstream fan wheel (16) and the shaft being a shaft (24) of the low-pressure compressor (14).

8. Turbomachine according to claim 7, **characterized in that** the gear train reducer (10) is axially interposed between an upstream bearing (44, 46) and a downstream bearing (40) supported by a stator structure (42, 48) of the low-pressure compressor (14), the upstream bearing (44, 46) rotatably guiding a connecting shaft (38) from the fan wheel (16) to the satellite carrier (36) and the downstream bearing (40) rotatably guiding the shaft (24) of the low-pressure compressor.

9. Turbomachine according to claim 8, **characterized in that** the first fixed oil spraying means are integrated into an oil circuit further comprising second oil spraying means on the upstream bearing (44, 46) and the downstream bearing (40) and a pump (84) for simultaneous feeding of the first (70) and second (80) oil spraying means.
